**Europäisches Patentamt**

**European Patent Office**

**Office européen des brevets**

(19)

(11) Veröffentlichungsnummer : **0 425 917 B1**

(12) **EUROPÄISCHE PATENTSCHRIFT**

(45) Veröffentlichungstag der Patentschrift :
14.04.93 Patentblatt 93/15

(51) Int. Cl.$^5$ : **G01B 11/30**

(21) Anmeldenummer : **90120034.5**

(22) Anmeldetag : **19.10.90**

(54) **Verfahren zur Qualitätskontrolle von metallischen Oberflächen.**

(30) Priorität : **28.10.89 DE 3936059**

(43) Veröffentlichungstag der Anmeldung :
**08.05.91 Patentblatt 91/19**

(45) Bekanntmachung des Hinweises auf die
Patenterteilung :
**14.04.93 Patentblatt 93/15**

(84) Benannte Vertragsstaaten :
**DE ES FR GB IT**

(56) Entgegenhaltungen :
**EP-A- 0 195 825**
**CH-A- 663 473**
**DE-A- 2 940 154**

(73) Patentinhaber : **AUDI AG**
**Postfach 2 20**
**W-8070 Ingolstadt (DE)**

(72) Erfinder : **Bergmann, Hans-Wilhelm, Prof.-Dr.**
**Irisstrasse 9**
**W-8501 Eckental-Brand (DE)**

## Beschreibung

Die Erfindung betrifft ein Verfahren zur Qualitätskontrolle von metallischen Oberflächen, gemäss dem Oberbegriff des Patentanspruches 1.

In neuerer Zeit werden auch Excimer-Laser zur Behandlung der Funktionsoberflächen von metallischen Bauteilen eingesetzt. Excimer-Laser sind gepulste Edelgashalogenid-Laser mit kurzwelliger Strahlungsemission im UV-Bereich. So wird z. B. in der DE-A-39 22 377 vorgeschlagen, Bauteile mit dem Excimer-Laser mit einer definierten Energie zu belichten, um hinsichtlich ihrer tribologischen Eigenschaften und/oder Festigkeitseigenschaften und/oder ihrer Fertigungsgüte Verbesserungen zu erreichen.

Bei einer Fertigung in größeren Einheiten und/oder bei hohen Oberflächenqualitätsanforderungen, z. B. bei der Belichtung der Zylinderlaufflächen von Hubkolben-Brennkraftmaschinen, kommt der Prozeßsicherheit bzw. der ständigen Reproduzierbarkeit der Oberflächen eine große Bedeutung zu.

Ein derartiges Verfahren beschreibt die DE-A-2 940 154, bei dem die Rauigkeit einer Oberfläche erfaßt werden soll. Dazu wird auf die Oberfläche eines Musterwerkstückes und auf die Oberfläche eines Prüfwerkstückes eine kohärente, monochromatische Strahlung gerichtet, die jeweils reflektiertes Strahlung zu einem Fotovervielfacher geleitet, numerisch aufbereitet und schließlich diese beiden Werte verglichen. Durch Division dieser Werte kann auch eine relative Oberflächenrauigkeit gebildet werden. Ferner wird vorgeschlagen, die Überprüfung on-line während der Fertigung vorzunehmen, sodaß ggf. eine adaptive Prozessteuerung ermöglicht ist.

Aufgabe der Erfindung ist es deshalb, ein Verfahren der gattungsgemäßen Art aufzuzeigen, mit dem die Oberflächenqualität schnell und mit hoher Genauigkeit bestimmbar und gegebenenfalls einstellbar ist.

Diese Aufgabe wird erfindungsgemäß mit den Merkmalen des Patentanspruches 1 gelöst. Vorteilhafte und zweckmäßige Weiterbildungen der Erfindung sind den abhängigen Patentansprüchen entnehmbar.

Erfindungsgemäß wird also die Oberflächenqualität on-line, d. h. unmittelbar gekoppelt mit der Laserbearbeitung, optisch durch Differenzreflektometrie in einem vorgegebenen Spektralbereich erfaßt und somit überwacht und/oder durch adaptiven Eingriff in die Prozeßsteuerung des Excimer-Lasers eingestellt.

Es wurde erkannt, daß das Reflexionsvermögen der Oberfläche direkt mit den elektronischen Eigenschaften des belichteten Materials verknüpft ist. Ändern sich diese Kennwerte, so ist dies auch an einer Änderung des Reflexionsverhaltens festzustellen. Durch die vorgeschlagene Differenzreflektometrie können nun minimalste Änderungen gegenüber einem konstanten Standard bzw. einer Referenzoberfläche schnell und sehr sensibel festgestellt werden.

Als Referenzfläche kann dabei entweder das Reflexionsverhalten der Oberfläche vor der Bearbeitung mit dem Excimer-Laser herangezogen werden, wobei dann eine definierte Veränderung angestrebt wird, oder es kann eine Referenzfläche mit optimaler Oberflächenqualität in einem vorgegebenen Spektralbereich vermessen und dieser Reflexionswert gegebenenfalls mit einer vorgegebenen Toleranz als zulässig vorgegeben werden.

Bevorzugt wird dabei gemäß den Merkmalen von Anspruch 3 vorgeschlagen, einen geeigneten Korrelationswert zwischen Ist- und Soll-Reflexionswert zu bilden, der als Maß für die Oberflächenqualität dient und on-line in die Prozeßsteuerung eingeht.

Die reflektierte Intensität der Lichtquelle wird spektral für die Referenzfläche und die belichtete Oberfläche ermittelt. Verwendet man für die Differenzreflektometrie ein Lichtmikroskop in Kombination mit einem x-y-Stelltisch, so kann auch die laterale Änderung des Reflexionsverhaltens gemessen werden.

Um die zu bearbeitenden Datenmengen und damit die Auswertezeiten gering zu halten, wird man nur einen speziellen, zur Auswertung notwendigen Spektralbereich erfassen. Man wird dabei einen Spektralbereich wählen, der besonders sensibel auf die auftretenden Oberflächenqualitätsschwankungen reagiert. Dieser Spektralbereich ist abhängig von der Werkstoffzusammensetzung und den vorausgegangenen Bearbeitungsverfahren.

Ein Ausführungsbeispiel der Erfindung ist im folgenden mit weiteren Einzelheiten näher erläutert. Die schematische Zeichnung zeigt in

**Fig. 1** die Bearbeitung einer metallischen Oberfläche eines Werkstückes mit einem Excimer-Laser und einer verfahrensgemäßen Qualitätssteuerung, und

**Fig. 2** eine Reflexionskurve $R_{rel.}$ eines mit einem Excimer-Laser belichteten Werkstückes.

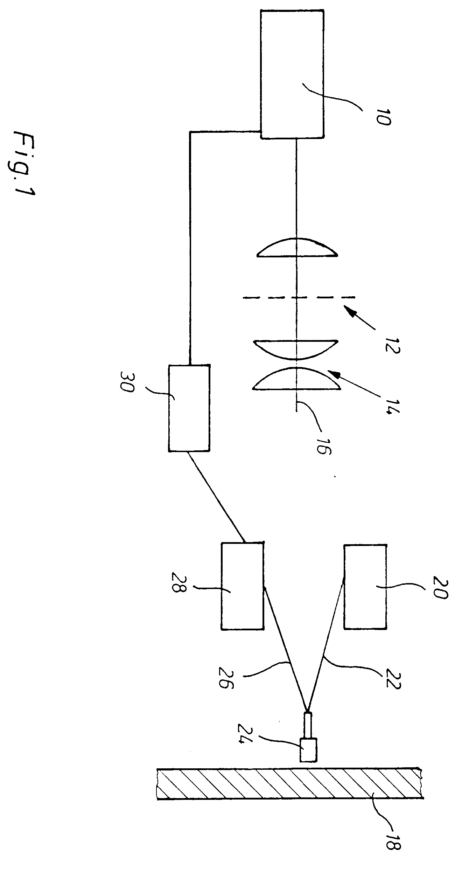

In der Fig. 1 stellt 10 einen Excimer-Laser dar, mit einer Maske 12 und Linsen 14. Der Laserstrahl 16 wird über die diaprojektorartige Optik 12,14 auf die Oberfläche des Werkstückes 18 abgebildet.

Auf die Oberfläche wird ferner das Licht einer Xenon-Lampe 20 gestrahlt, und zwar über eine koaxiale Lichtleitfaser 22, die in einen über die Oberfläche geführten Meßkopf 24 mündet. Über eine weitere Lichtleitfaser 26 wird das im Meßkopf 24 reflektierte Licht nach dessen Verzweigung einem Simultanspektrometer 28 (z. B. der Handelsbezeichnung Zeiss MCS) zugeleitet und hier mit einer zeitlichen Auflösung von 0,006 Sekunden die spektrale Verteilung des reflektierten Lichts zwischen 300 bis 720 nm gemessen.

Die Intensitäten des reflektierten Lichtes über dem Spektralbereich werden unmittelbar nach der Excimer-Laser-Belichtung aufgenommen und einem Prozeßrechner 30 zugeführt, indem aus dem gemessenen Istwert ($R_{Oberfläche}$) zu einem vrgegebenen Sollwert ($R_{Referenzfläche}$) ein Korrelationswert gebildet wird. Liegt der Korrelationswert $R_{rel.}$ außerhalb eines bestimmten Toleranzbandes, so werden gezielt Verfahrensparameter (Leistungsdichte, Pulsfrequenz, Pulsdauer) des Excimer-Lasers verändert, um die vorgegebene Oberflächenqualität zu halten bzw. einzustellen.

Das Reflexionsvermögen ist direkt mit den elektronischen Eigenschaften des bestrahlten Materials verknüpft. Ändern sich diese Kennwerte, so ist dies auch an einer Änderung des Reflexionsverhaltens festzustellen.

Unter idealen Bedingungen, d. h. bei senkrechtem Lichteinfall mit einer ideal ebenen und glatten Oberfläche, wie man sie z. B. bei gesputterten Spaltflächen von Einkristallen mit Ultrahochvakuum annähern kann, sind einfallende, reflektierte und absorbierte Lichtintensität über die Gleichung

$$I_{Einf.} = I_{Abs.} + I_{Refl.}$$

verknüpft. Bei nicht ideal glatter Fläche gibt es aufgrund der Oberflächentopographie einen diffusen Streuanteil, der nicht in Richtung des einfallenden Strahls abgestrahlt wird. Bei nicht senkrechtem Einfall können Polarisationseffekte die Intensität des in Ausfallrichtung reflektierten Strahls beeinflussen. Betrachtet man verschiedene Metalle, so können diese neben dem metallischen Glanz, der eine Folge der metallischen Bindung ist, auch eine charakteristische Farbe besitzen. Bei einem Vielkristall kann die reflektierte Intensität indirekt auch von der Orientierungsverteilung der Kristalle (Textur) abhängen.

Nicht nur die unterschiedliche Orientierung der Kristalle, sondern auch das veränderte Reflexionsverhalten an den Korngrenzen verändert das optische Verhalten. So kann es durch Kristalldefekte zu verstärkter Absorption kommen, da die Defekte die lokale Ausbildung der Bandstruktur verändern. Erhöhte Absorption können z. B. bewirken: Korngrenzen oder Zwillingsgrenzen sowie Versetzungen und Punktdefekte, wie beispielsweise Leerstellen oder Zwischengitteratome, etc.

Betrachtet man Metalle an der Atmosphäre, wie dies bei der industriellen Bearbeitung zumeist unvermeidlich ist, so wird oberhalb des Metalls stets ein Oxidfilm vorhanden sein, dessen Dicke durch die Oxidationsgesetze bestimmt wird. Hierdurch werden die optischen Eigenschaften ebenfalls merklich verändert. Die Intensität des reflektierten Strahls wird also nicht nur von den optischen Eigenschaften des Metalls selbst bestimmt, sondern auch von einer Reihe zusätzlicher Störeffekte. So liegen bei technischen Oberflächen Schmutzpartikel, organische Filme und Oxidschichten an der Oberfläche vor. Weiterhin ist die Defektdichte an der Oberfläche wesentlich höher als im Inneren.

Die reflektierte Intensität I wird spektral oder in einem Spektralbereich für die Oberfläche des Werkstücks und für eine Referenzfläche ermittelt. Dies hat zum einen den Vorteil, das die Intensitätsschwankungen der breitbandig emittierenden Xenon-Lampe 20 weitgehendst eliminiert werden. Durch Umformung läßt sich das relative spektrale Reflexionsvermögen $R_{rel}$ (f) in Prozent angeben nach Gleichung

$$R_{Rel.} (f) = \frac{R_{Oberfl.}(f)}{R_{Referenzfl.}(f)}$$

Wählt man eine feste Meßzeit, so läßt sich die vorstehende Gleichung als Funktion der Zeit bestimmen. Auf diese Weise kann man z. B. anhand der Anlauffarben den zeitlichen Oxidationsverlauf eines Metalls messen.

$$R_{Rel.} (t) = R_{Rel.} (f,t)$$

Verwendet man für die Differenzreflektometrie ein Lichtmikroskop in Kombination mit einem x-y-Stelltisch, so kann auch die laterale Änderung von R gemessen werden gemäß

$$R_{Rel.} (t) = R_{Rel.} (f,x,y)$$

Dementsprechend ist anzunehmen, daß $R_{rel}$ eine Funktion aller Einflußgrößen gleichzeitig ist. Um die zu bearbeitenden Datenmengen und damit die Auswertezeiten gering zu halten, wird man nur in Sonderfällen $R_{rel}$ für f,t,x,y messen. Bevorzugt wird man auf die spektrale Auflösung verzichten und stattdessen das relative Reflexionsvermögen für einen geeigneten Spektralbereich verwenden (Gemäß nachstehender Gleichung).

$$R_{Rel.} \Big|_{f1}^{f2} = \int_{f1}^{f2} R_{Rel.} (f)\, df$$

Hierdurch gelingt es, einerseits eine viel größere Information über die beleuchteten Flächen zu erhalten, andererseits kann man bei bekanntem Bearbeitungsprozeß sich von vornherein den Spektralbereich aussuchen, in dem der Werkstoff auf den Bearbeitungsprozeß am sensibelsten reagiert.

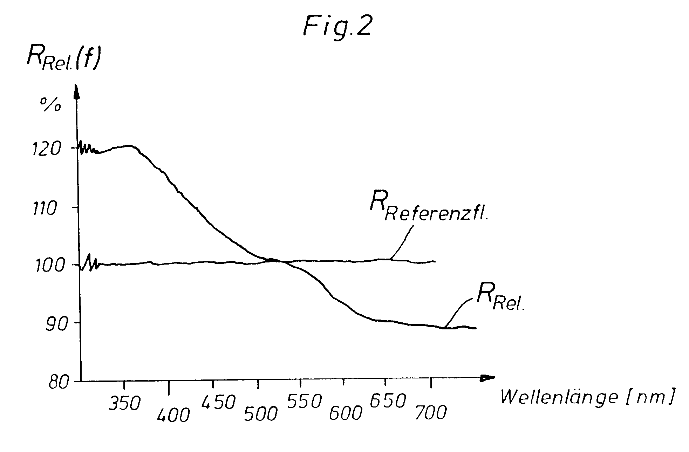

In Fig. 2 ist in einer Kurve das relative Reflexionsverhalten $R_{rel}$ der Oberfläche des Werkstückes 18 nach einer Belichtung mit dem Excimer-Laser 10 dargestellt, bei einer Energiedichte von 23 mj/mm² und einer einmaligen Belichtung. Als Referenzfläche wurde die Oberfläche des Werkstückes im unbelichteten Zustand verwendet. Man erkennt, daß das Reflexionsvermögen $R_{Rel}$ im Spektralbereich von ca. 300 bis 450 nm verbessert wurde, während im Spektralbereich von ca. 550 bis 700 nm eine Verschlechterung des Reflexionsvermögens auftritt.

Mißt man die unbelichtete Referenzfläche zweimal, so muß sich unter idealen Bedingungen ein Wert von 100 % ergeben. Dies ist mit Ausnahme des Spektralbereiches von 300 bis 310 nm gut erfüllt.

Belichtet man eine andere Stelle des gleichen Werkstückes mit identischen Laserparametern, so erhält man einen Kurvenverlauf, der die gleichen charakteristischen Merkmale enthält, wobei jedoch eine Parallelverschiebung der Kurve bzw. eine Absolutabweichung der Intensität von 1 bis 2% möglich ist. Diese Abweichungen können z. B. schon dadurch auftreten, daß leichte Veränderungen in der Oberflächenrauhigkeit vorhanden sind, oder Schwankungen in der Absolutintensität der beiden Laserpulse vorhanden waren. Normiert man die beiden Kurven auf das integrale Reflexionsvermögen im untersuchten Spektralbereich, so ergeben sich deckungsgleiche Kurven.

Es hat sich gezeigt, daß man als Variable des Bearbeitungsprozesses die Energiedichte, die Wellenlänge, die Pulslänge und die Pulszahl wählen kann. Die Pulslänge kann bei gleicher Leistungsflußdichte eine Veränderung der Einwirktiefe bewirken, so muß aber gerätespezifisch im allgemeinen als konstant angenommen werden. Die Wellenlänge ist in dem Maße erheblich, in dem eine Erhöhung der wellenlängenabhängigen Absorption auftritt, was dann aber mit einer Änderung der absorpierten Energie pro Puls verbunden ist. Damit ergeben sich als wichtigste Variable die Energie pro Puls und die Zahl der Pulse pro belichteter Fläche.

Bei der Bearbeitung des Werkstückes 18 mit dem Excimer-Laser 10 wird man bei einer Kurve $R_{rel}$, wie in Fig. 2 beispielsweise gezeigt, einen sensiblen Spektralbereich um 350 nm und 650 nm erfassen und die Laserparameter wie vorstehend erläutert verändern, um $R_{rel}$ in einem vorgegebenen Toleranzband zu diesen Kurvenabschnitten zu halten.

Abweichend dazu kann auch eine Kurve $R_{rel}$ festgelegt werden, die einzelnen Spektralbereichen oder den gesamten spektralen Reflektionsvermögen einer eine optimale Oberflächenqualität nach der Laserbehandlung aufweisenden Referenzfläche $R_{Referenzfläche}$ entspricht.

## Patentansprüche

1.  Verfahren zur Qualitätskontrolle von metallischen Oberflächen, die vorausgehend mit einem gepulstem Laser, insbesondere einem Excimerlaser, belichtet wurden, und deren Oberflächenqualität on-line, optisch durch Bestrahlung mit einer Lichtquelle und Erfassung und Auswertung der reflektierten Strahlungsintensität bestimmt wird, **dadurch gekennzeichnet**, daß die spektrale Verteilung der reflektierten Strahlungsintensität über einen vorgegebenen Spektralbereich erfaßt wird.

2.  Verfahren nach Anspruch 1, **dadurch gekennzeichnet**, daß der vorgegebene Spektralbereich zwischen 300 und 720 nm liegt.

3.  Verfahren nach den Ansprüchen 1 und 2, **dadurch gekennzeichnet**, daß die reflektierte Strahlungsintensität der Oberfläche und die reflektierte Strahlungsintensität einer Referenzfläche ermittelt und eine Korrelationsfunktion gebildet wird, die als Maß für die Oberflächenqualität dient, wobei die Korrelationsfunktion gemäß nachstehender Gleichung gebildet wird

$$R_{Rel}\,(f) \;=\; \frac{R_{Oberfläche}(f)}{R_{Referenzfläche}(f)}$$

wobei f für Wellenlänge steht.

4.  Verfahren nach einem der Ansprüche 1 bis 3, **dadurch gekennzeichnet**, daß auch die laterale Änderung der Korrelationsfunktion $R_{Rel}\,(f)$ in X-, Y-Richtung erfaßt wird.

5.  Verfahren nach einem der vorhergehenden Ansprüche, **dadurch gekennzeichnet**, daß die Oberfläche mit einer Xenonlampe (20) über Lichtleitfasern (22) und einen über die Oberfläche geführten Meßkopf (24) belichtet wird und daß die reflektierte Strahlungsintensität über ein Simultan-Spektrometer (28) erfaßt und ausgewertet wird.

**Claims**

1. A process for the quality control of metallic surfaces which were previously exposed to a pulsed laser, particularly an excimer laser, and the surface quality of which is determined optically on-line by irradiation with a light source and recording and evaluating the reflected radiation intensity, characterised in that the spectral distribution of the reflected radiation intensity is recorded over a predetermined spectral region.

2. A process according to Claim 1, characterised in that the predetermined spectral region is between 300 and 720 nm.

3. A process according to Claims 1 and 2, characterised in that the reflected radiation intensity of the surface and the reflected radiation intensity of a reference surface are determined and a correlation function is formed which serves as a measure of the surface quality, wherein the correlation function is formed in accordance with the following equation

$$R_{Rel}(f) = \frac{R_{Surface}(f)}{R_{Reference\ surface}(f)}$$

where f denotes wavelength.

4. A process according to any one of Claims 1 to 3, characterised in that the lateral change of the correlation function $R_{Rel}(f)$ in the X, Y direction is also recorded.

5. A process according to any one of the preceding Claims, characterised in that the surface is exposed to a xenon lamp (20) via optical waveguides (22) and a measuring head (24) guided above the surface and that the reflected radiation intensity is recorded and evaluated via a simultaneous spectrometer (28).


**Revendications**

1. Procédé de contrôle de qualité de surfaces métalliques qui ont été précédemment irradiées avec un laser en régime pulsé, en particulier avec un laser excimer, et dont la qualité de surface est déterminée "en ligne", optiquement par rayonnement avec une source lumineuse et par détection et évaluation de l'intensité du rayonnement réfléchi, caractérisé en ce que la distribution spectrale de l'intensité du rayonnement réfléchi est détectée sur l'étendue d'un domaine spectral prédéfini.

2. Procédé selon la revendication 1, caractérisé en ce que le domaine spectral prédéfini se situe entre 300 et 720 nm.

3. Procédé selon la revendication 1 ou 2, caractérisé en ce que l'intensité de rayonnement réfléchi de la surface et l'intensité de rayonnement réfléchi d'une surface de référence sont détectées et il est établi une fonction de corrélation qui sert de mesure pour la qualité de surface, la fonction de corrélation étant établie conformément à l'équation suivante

$$R_{rel}(f) = \frac{R_{surface}(f)}{R_{surface\ de\ réf.}(f)}$$

dans laquelle f désigne la longueur d'onde.

4. Procédé selon l'une quelconque des revendications 1 à 3, caractérisé en ce que la variation latérale de la fonction de corrélation $R_{rel}(f)$ dans la direction X, Y est également détectée.

5. Procédé selon l'une quelconque des revendications 1 à 4, caractérisé en ce que la surface est illuminée avec une lampe au xénon (20) au moyen de guides de lumière par fibres optiques (22) et d'une tête de mesure (24) guidée sur la surface, et en ce que l'intensité du rayonnement réfléchi est détectée au moyen d'un spectromètre simultané (28) et évaluée.

Fig.1

Fig.2